# EUROPEAN PATENT APPLICATION

(11) **EP 1 342 419 A1**
(43) Date of publication of application: **10.09.2003**
(21) Application number: 03425146.2
(22) Date of filing: 07.03.2003
(51) Int. Cl.: A23K 1/16

(54) **Lipid product based on monoglycerides and diglycerides of oleic acid, randomized triglycerides and glycerol, for animal nutrition**

(30) Priority: 08.03.2002 IT FI20020043
(71) Applicant: Cantini, Fernando, 50136 Firenze (IT)
(72) Inventor: Cantini, Fernando, 50136 Firenze (IT)
(74) Representative: Mannucci, Michele

(57) **Abstract**

An animal feed product based on monoglycerides of oleic acid (from 5% to 50%), diglycerides of oleic acid (from 5% to 50%), randomized triglycerides (from 40% to 90%) and glycerol (from 1 % to 3%).

## Description

The crisis resulting from the explosion of the phenomenon of B.S.E. ("Mad cow disease") in the year 2000 has called into question the procedural requirement to prepare feeds in the same way as previously. In formulating diets the feeds industry always and only sought the objective of increasing the productive performance of animals at the least possible cost. This philosophy took for granted the reuse of slaughterhouse wastes which - once treated and returned to the animal feed circuit as meat flours and animal fats - became an opportunity and no longer a cost for disposal. No-one imagined (or wished to imagine) that the recycling of slaughterhouse wastes without any break in continuity could itself carry the risk of a possible progressive accumulation in the food chain of a toxic or in any event harmful factor, should such a factor be accidentally introduced into it, and that with this repeated recycling this toxic factor could be spread to a large number of animals.

The propagation of B.S.E., which took place through meat flours, has revealed this problem in a striking way.

It is now understood that there is a need to re-examine and redesign animal feed guidelines which have been consolidated by years of satisfactory experience.

Nutritionalists, remembering the old - all-American - principle that "feed" can also be prepared using only cereals and soya, have put the clock back by going back to old ways. In the light of this there were created the "plant-based feeds", that is feeds whose formulations did not include raw materials of animal origin such as fish flour, meat flour and animal fats. In such feeds the animal proteins are solely of plant origin, (i.e. based on cereals and flours extracted from soya beans, sunflowers, palm trees, coconuts and other plants).

Economic parameters have obviously in this situation suffered changes leading to higher costs. It very soon became obvious that the change, although of extreme simplicity on paper, was not entirely painless in the real world.

With regard to poultry feeds and pig feeds, and restricting the discussion to the weight in the formula of the lipids only, some considerations of a general nature become necessary.

Animal fats in fact have different chemical and physical characteristics from vegetable oils; some of the most significant of these are summarized below:
- different melting points,
- different positioning of the saturated palmitic and stearic fatty acids within the triglyceride molecule (large amount of palmitic acid in position 2 in lard),
- appreciable levels of palmitoleic acid (in chicken fat),
- high quantity of stearic acid (in beef suet).
   For commercial and economic reasons (availability and price), the oil most readily available to the animal feeds industry immediately proved to be palm oil, either unrefined or refined. But when an attempt was made to replace animal fats with palm oil, animal productivity collapsed.
   After investigation of the reasons for this, the following findings can be stated and the following problems emerge.
   Most of the fat digested is dispersed in the aqueous environment of the intestinal lumen as a component of micellar mixtures of bile salts.
   Of the lipids which undergo micellar dissolution mention may be made of long chain unsaturated monglycerides, saturated monoglycerides with a low melting point and unsaturated fatty acids, provided that the temperature of the system is higher than the melting point or than the eutectic temperature for the micelle mixture.
   A further property of lipid micelles of bile salts seems to be their capacity to dissolve considerable volumes of relatively non-polar solvents in aqueous solutions, presumably in their internal liquid parts. The micellar solubility of palmitic acid and high melting point monoglycerides increases appreciably in aqueous solutions containing monoglycerides with strong amphiphilic properties.
   In addition to this it is known that pancreatic lipases hydrolyze the neutral lipid into monoglycerides and free fatty acids, and that both the monoglycerides and the fatty acids are absorbed.
   It has also been demonstrated - in many investigations published throughout the world - that the absorption of palmitic acid in single-stomached animals is very low when the palmitic acid is administered alone or in a mixture containing low levels of unsaturated fatty acids. In particular it has been demonstrated that the addition of oleic acid increases the absorption of palmitic acid and the addition of oleic acid monoglyceride causes an increase in absorption which is 2 to 5 times greater than that obtained with oleic acid for the same molar ratios.
   Surprisingly it has been discovered that when palm oil containing 45% of palmitic acid is used in animal feeds it is necessary to ensure that the molar ratios between unsaturated fatty acids, unsaturated monoglycerides and palmitic acid in the intestinal lumen are correct, because otherwise there will be low absorption of the palmitic acid.
   Palmitic acid is also absorbed if it is in the 2 position in the triglyceride molecule.
   As is well known, in vegetable oils palmitic acid is always and only in the outermost positions of the triglyceride, that is in the 1 and 3 positions, precisely the molecular positions which are exposed to the action of lipases. When attacked by lipases palmitic acid is split off from the triglyceride and being in the intestine in the free form is largely unabsorbed. Palmitic acid in the free form is in fact extremely reactive and easily forms insoluble compounds within the intestine which are expelled with the faeces.
   On the other hand, if the palmitic acid is in position 2 it is not attacked by lipases. Lipases only detach the two fatty acids located in the 1 and 3 positions; palmitic acid remains bound to the glycerol by a single bond and is therefore easily absorbed by the intestinal villi in the form of monoglyceride.
   The problem of how to feed single-stomached animals in the very first days of life when the digestive apparatus - which is not completely functioning
- secretes limited quantities of both bile salts and pancreatic lipases has been in existence for a long time. Under such conditions the difficulty of digesting lipids is obvious.

From what has been stated above there has arisen the need to investigate a lipid product which could overcome the following two problems:
1) how to ensure that palmitic acid (which is present in palm oil in large quantities) is absorbed by single-stomached animals, and
2) how to provide energy which can be digested in the very first days of an animal's life.

This invention resolves these problems and its subject is a lipid matrix which is capable of resolving the abovementioned problems, from the point of view of both the results which can be achieved and the requisite industrial cheapness.

Basically, the product in question - for animal feed - comprises monoglycerides and diglycerides of oleic acid which can be obtained from olive oil, rapeseed oil, sunflower oil and other vegetable oils, and randomized triglycerides.

Advantageously said monoglycerides and diglycerides of oleic acid are obtained from acid olive oil, and so also may be the randomized triglycerides.

More particularly the product in question may comprise monoglycerides of oleic acid, diglycerides of oleic acid, randomized triglycerides and glycerol.

A product according to the invention consists of lipids containing:
a) from 5% to 50% and preferably from 20% to 40% of monoglycerides of oleic acid,
b) from 5% to 50% and preferably from 20% to 40% of diglycerides of oleic acid,
c) from 40% to 90% and preferably from 20% to 60% of randomized triglycerides so as to contain at least 25% of the quantity of palmitic acid present in the lipid in the 2 position in the molecule, and
d) from 1% to 3% and preferably from 1.5% to 2.5% of glycerol.

The raw material preferably used to obtain the monoglycerides and the diglycerides of oleic acid is acid olive oil, which is obtained as a by-product in the refining of olive oil. Obviously other sources of lipids (rapeseed oil having a low erucic acid content, highly oleic sunflower oil and other oils) could also be used, but obviously "acid olive oil" is the cheapest raw material and is always available on the market in large quantities.

The advantages which can be obtained in the animal husbandry field through the use of monoglycerides of oleic acid are surprising. It may be thought that this can be explained by substantial capacity on the part of the mono-olein to render palmitic acid and stearic acid, which are normally poorly assimilated by single-stomached animals, more digestible. Research carried out on broilers has surprisingly demonstrated that mixtures containing different quantities of palm oil (from 75% to 25%) are actually more digestible, owing to the presence of monoglycerides of oleic acid, than refined soya oil, which has hitherto been regarded as absolutely the most digestible oil for single-stomached animals. A content of between 7% and 15% of monoglycerides of oleic acid may be envisaged.

The best results are obtained with percentages of monoglycerides of oleic acid varying between 5% and 20% of the total fatty matter present in the diet; 5% of monoglycerides is in fact the minimum necessary quantity to produce effective emulsion of the fatty material present, while 15% is the optimum quantity for absorbing 30% of palmitic acid (this being the optimum percentage in the fatty matter of diets for single-stomached animals). Concentrations lower than 5% do not serve any purpose, while concentrations higher than 20% increase costs without achieving proportional benefits.

Tables I and II below demonstrate what has been stated.

**TABLE I**

| Composition of the ingredients of experimental diets (%) | | | | | |
|---|---|---|---|---|---|
| | Control | Diet 1 | Diet 2 | Diet 3 | Diet 4 |
| Maize | 57.45 | 57.45 | 57.45 | 57.45 | 57.45 |
| Soya, 48% flour extract | 33.10 | 33.10 | 33.10 | 33.10 | 33.10 |
| Soya oil | 5.25 | - | - | - | - |
| Oil 1⁽¹⁾ | - | 5.25 | - | - | - |
| Oil 2⁽²⁾ | - | - | 5.25 | - | - |
| Oil 3⁽³⁾ | - | - | - | 5.25 | - |
| Oil 4⁽⁴⁾ | - | - | - | - | 5.25 |
| Gluten | 0.20 | 0.20 | 0.20 | 0.20 | 0.20 |
| CaHPO₄.2H₂O | 1.63 | 1.63 | 1.63 | 1.63 | 1.63 |
| CaCO₃ | 0.94 | 0.94 | 0.94 | 0.94 | 0.94 |
| Int. miner. Vitamin. | 0.50 | 0.50 | 0.50 | 0.50 | 0.50 |
| NaHCO₃ | 0.20 | 0.20 | 0.20 | 0.20 | 0.20 |
| NaCl | 0.20 | 0.20 | 0.20 | 0.20 | 0.20 |
| DL-Methionine | 0.26 | 0.26 | 0.26 | 0.26 | 0.26 |
| Lysine HCl | 0.07 | 0.07 | 0.07 | 0.07 | 0.07 |
| Choline chloride 50% | 0.15 | 0.15 | 0.15 | 0.15 | 0.15 |
| Phytazyme | 0.05 | 0.05 | 0.05 | 0.05 | 0.05 |

| | | | | | |
|---|---|---|---|---|---|
| (1) Mixture of: 75% palm oil and 25% olive oil (containing 30% of monoglycerides and 20% of diglycerides), | | | | | |
| (2) Mixture of: 50% palm oil and 50% olive oil (containing 30% of monoglycerides and 20% of diglycerides), | | | | | |
| (3) Mixture of: 25% palm oil, 50% olive oil (containing 30% of monoglycerides and 20% of diglycerides) and 25% of esterified olive oil, | | | | | |
| (4) Mixture of: 50% of olive oil (containing 30% of monoglycerides and 20% of diglycerides) and 50% of esterified olive oil. | | | | | |

**TABLE II**

| Average increases and conversion indexes | | | | | |
|---|---|---|---|---|---|
| | Control | Diet 1 | Diet 2 | Diet 3 | Diet 4 |
| During the 1st week | | | | | |
| Increase | 134.3a | 142.3 | 149.9b | 147.5b | 142.3 |
| Conversion index | 1.15 | 1.16 | 1.11 | 1.15 | 1.16 |

| During the 2nd week | | | | | |
|---|---|---|---|---|---|
| Increase | 294.0 | 285.2 | 274.7 | 282.3 | 284.0 |
| Conversion index | 1.35 | 1.37 | 1.32 | 1.32 | 1.33 |

| Over 35 days | | | | | |
|---|---|---|---|---|---|
| Increase | 1781.6 | 1797.0 | 1822.0 | 1740.0 | 1825.1 |
| Conversion index | 1.75a | 1.76a | 1.59b | 1.69 | 1.65 |

| In the 6th week | | | | | |
|---|---|---|---|---|---|
| Increase | 905.2 | 884.4 | 932.9 | 941.1 | 921.0 |
| Conversion index | 1.59 | 1.71 | 1.59 | 1.54 | 1.65 |

| Over 42 days | | | | | |
|---|---|---|---|---|---|
| Increase | 2686.8 | 2681.4 | 2754.9 | 2681.1 | 2746.1 |
| Conversion index | 1.70 | 1.74 | 1.59 | 1.64 | 1.65 |

| During the 7th week | | | | | |
|---|---|---|---|---|---|
| Increase | 522.7 | 628.8 | 614.0 | 574.6 | 517.0 |
| Conversion index | 2.46 | 2.01 | 1.96 | 2.43 | 2.22 |

| Over 49 days | | | | | |
|---|---|---|---|---|---|
| Increase | 3209.5 | 3310.2 | 3368.9 | 3255.7 | 3263.1 |
| Conversion index | 1.81 | 1.78 | 1.64 | 1.75 | 1.73 |

## Claims

1. A lipid product for animal feed, **characterized in that** it comprises monoglycerides of oleic acid.

2. A product according to claim 1, **characterized in that** said monoglycerides of oleic acid are obtained from acid olive oil.

3. A lipid product for animal feed, **characterized in that** it comprises monoglycerides of oleic acid, diglycerides of oleic acid and randomized triglycerides in quantities such that they can be regarded as nutrients (that is raw materials for feeds) and not "combined substances", and glycerol.

4. Product according to claim 3, **characterized in that** it comprises:
- from 5% to 50% of monoglycerides of oleic acid,
- from 5% to 50% of diglycerides of oleic acid,
- from 40% to 90% of randomized triglycerides so as to contain at least 25% of the quantity of palmitic acid present in the lipid in the 2 position in the molecule, and
- from 1% to 3% of glycerol.

5. A product according to claim 3, **characterized in that** it comprises:
- from 20% to 40% of monoglycerides of oleic acid,
- from 20% to 40% of diglycerides of oleic acid,
- from 20% to 60% of randomized triglycerides so as to contain at least 25% of the quantity of palmitic acid present in the lipid in the 2 position in the molecule, and
- from 1.5% to 2.5% of glycerol.

6. A product according to at least claim 2 or 3, for feeding single-stomached animals, **characterized in that** it comprises a mixture containing from 75% to 25% of palm oil and from 7% to 15% of monoglycerides of oleic acid.

7. A product according to at least one of the foregoing claims, **characterized in that** it comprises percentages of monoglycerides of oleic acid of between 5% and 20% of the fatty material present in a diet which includes palmitic acid.

8. A product according to claim 7, for a diet comprising a mixture of: 75% of palm oil and 25% of olive oil (containing 30% of monoglycerides and 20% of diglycerides).

9. A product according to claim 7, for a diet comprising a mixture of: 50% of palm oil and 50% of olive oil (containing 30% of monoglycerides and 20% of diglycerides).

10. A product as defined and for the objects specified.
